(19) Europäisches Patentamt
European Patent Office
Office européen des brevets

(11) Veröffentlichungsnummer: **0 332 897 B1**

# (12) EUROPÄISCHE PATENTSCHRIFT

(45) Veröffentlichungstag der Patentschrift: **14.09.94**

(51) Int. Cl.5: **C07F 5/04**, C23F 11/14

(21) Anmeldenummer: **89103229.4**

(22) Anmeldetag: **24.02.89**

## (54) Reaktionsprodukte aus Borsäure und Alkanoletheraminen und deren Verwendung als Korrosionsschutzmittel.

(30) Priorität: **12.03.88 DE 3808372**

(43) Veröffentlichungstag der Anmeldung: **20.09.89 Patentblatt 89/38**

(45) Bekanntmachung des Hinweises auf die Patenterteilung: **14.09.94 Patentblatt 94/37**

(84) Benannte Vertragsstaaten: **BE CH DE ES FR GB IT LI NL SE**

(56) Entgegenhaltungen:
**EP-A- 0 116 348**
**US-A- 4 022 713**
**US-A- 4 382 006**

**PATENT ABSTRACTS OF JAPAN Band 12, Nr. 198 (C-502)(3045), 8. Juni 1988; & JP - A - 63493 (JOHNSON K.K.) 05.01.1988**

**PATENT ABSTRACTS OF JAPAN Band 5, Nr. 168 (C-77)(840),27. Oktober 1981; & JP - A - 5698483 (MITSUBISHI YUKA K.K.) 07.08.1981**

(73) Patentinhaber: **REWO Chemische Werke GmbH**
**Industriegebiet West**
**D-36396 Steinau (DE)**

(72) Erfinder: **Hadamik, Franz-Josef**
**Haselstrasse 6 a**
**D-6483 Bad Soden (DE)**
Erfinder: **Kappa, Wilfried, Dr. Dipl.-Chem.**
**Nordstrasse 13**
**D-6497 Steinau an der Strasse (DE)**
Erfinder: **Urban, Georg F.**
**Arminstrasse 90**
**D-6140 Bensheim (DE)**

EP 0 332 897 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Reaktionsprodukte aus Borsäure und Alkanoletheraminen und deren Verwendung als Korrosionsschutzmittel.

Von der metallverarbeitenden Industrie wurden in den letzten Jahren immer höhere Anforderungen hinsichtlich der Qualität der verwendeten Kühlschmiermittel gestellt.

Neben den guten Kühl- und Schmiereigenschaften wurden insbesondere gute Korrosionsschutzeigenschaften, Stabilität gegenüber Mikroorganismen und dort, wo ein Hautkontakt unvermeidbar war, dermatologisch unbedenkliche und allgemein nichttoxische Verbindungen gefordert.

Aber auch in anderen technischen Anwendungsbereichen, wo Wasser oder wässrige Lösungen in Gegenwart von korrosionsgefährdeten Metallen bzw. deren Legierungen zur Anwendung kommen, besteht immer ein Bedürfnis nach ausreichendem Korrosionsschutz.

In der Vergangenheit wurden bereits eine Reihe von Korrosionsschutzinhibitoren vorgeschlagen, wobei sich insbesondere die Salze oder Umsetzungsprodukte aus Mono-, Di- oder Trialkanolaminen und Borsäure gegebenenfalls unter Mitverwendung organischer Säuren, als positiv herausgestellt haben.

So sind aus der US-PS 2 999 064 Mischungen von Borsäure, ungesättigten Fettsäuren und Alkanolaminen bekannt. Die wässrigen Lösungen werden als Schneidflüssigkeiten eingesetzt und sollen verbesserte mikrobiozide Eigenschaften aufweisen. Neben dem Nachteil des Schäumens ist die anti-korrosive Wirksamkeit dieser Mischungen nicht ausreichend.

In der DE-OS 16 20 447 und der DE-OS 20 07 229 werden Salze oder Kondensationsprodukte von Alkanolaminen und Orthoborsäure als schaumarme, wasserhärtenunempfindliche Rostschutzmittel mit fungistatischen und bakteriostatischen Wirkungen beschrieben. Die Korrosionsschutzwirkung dieser Verbindungen hat sich in der Praxis aber als noch unzureichend erwiesen.

Bei der Mitverwendung von sekundären Aminen ist es nicht auszuschließen, daß durch Reaktion mit anderen Mischungsbestandteilen der wässrigen Endformulierungen oder unter Anwendungsbedingungen Nitrosamine gebildet werden. Die toxikologischen Bedenken gegen Nitrosamine sind hinreichend diskutiert worden und bekannt.

Nitrosaminbildung tritt bei der Verwendung primärer Amine nicht auf. Daher sind die in der US-PS 4 022 713 beschriebenen Umsetzungsprodukte aus Monoalkanolaminen mit 1 - 3 Kohlenstoffatomen im Alkanolrest in dieser Hinsicht unbedenklich. Bei ihrer Verwendung als Rostinhibitoren entsprechend sie aber noch nicht den Anforderungen der Praxis, außerdem hat sich bei der Verwendung als Schneidöle oder Kühlschmiermittel auch die Klebrigkeit ihrer Antrocknungsrückstände unangenehm bemerkbar gemacht.

Das Ziel der Erfindung war die Auffindung solcher wasserlöslicher Verbindungen, welche bei ihrer Verwendung in wässrigen Lösungen, gegebenenfalls unter Mitverwendung weiterer Komponenten, sowohl ausgezeichnete Korrosionsschutzwirkungen aufweisen, schaumarm sind als auch in den Anwendungskonzentrationen mikrobiozid oder mikrobiostatisch wirken und keine klebrigen Antrocknungsrückstände bilden.

Schließlich sollten die Verbindungen sowohl bei der Lagerung als auch unter Anwendungsbedingungen keine Nitrosamine bilden.

Dieses Ziel wurde nun überraschenderweise durch die Verwendung bzw. Mitverwendung von Reaktionsprodukten aus Borsäure und Alkanoletheraminen erreicht.

Gegenstand der Erfindung sind neue Reaktionsprodukte aus Orthoborsäure oder deren Analoga und Alkanoletheraminen der allgemeinen Formel I

$H(OCHR\text{-}CH_2)_n\text{-}O\text{-}R^1\text{-}NH_2$,  (I)

worin R = H oder $CH_3$; $R^1$ = $-(CH_2)_2-$, $-(CH_2)_3-$,

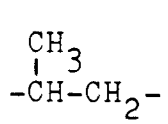

bedeutet und n eine Zahl zwischen 1 - 5, vorzugsweise 1 oder 2, sein kann.

Ein weiterer Gegenstand der Erfindung sind Korrosionsschutzmittel in Form einer wässrigen Lösung, enthaltend mindestens ein Reaktionsprodukt gemäß Anspruch 1.

Es wurde festgestellt, daß die erfindungsgemäßen neuen Reaktionsprodukte hinsichtlich ihrer Wirkung gegen Mikroorganismen, ihrer Korrosionsschutzwirkung, dem Schaumverhalten, dem toxikologischen und dermatologischen Verhalten allen Anforderungen der Praxis entsprechen. Darüberhinaus wurde überraschenderweise auch ein besseres Viskositätsverhalten und eine einfache Verarbeitbarkeit zu den Endformulierungen gefunden. Ein weiterer Vorteil liegt darin, daß die Antrocknungsrückstände klebfrei sind.

Die erfindungsgemäßen Reaktionsprodukte werden hergestellt durch Umsetzung von Orthoborsäure oder deren Analoga und den Alkanoletheraminen der allgemeinen Formel I in Molverhältnissen von Borsäure : Alkanoletheramin von 1 : 1 bis 1 : 6, wobei in Abhängigkeit der Molverhältnisse und Reaktionsbedingungen Verbindungen oder Mischungen in statistischer Verteilung entstehen. Bevorzugt werden Alkanoletheramine mit R = H, $R^1$ = $-(CH_2)_2-$ und n = 1 oder 2, insbesondere n = 1 im Molverhältnis von Borsäure zu Alkanoletheramin von 1 : < 3 bis1 : 1 eingesetzt.

Die Alkanoletheramine der allgemeinen Formel I sind technische Gemische, in welchen neben der Hauptkomponente andere Homologe in geringen Mengen vorhanden sind. Durch Destillation nach allgemein üblichen Bedingungen kann der Verteilungsgrad weiter eingegrenzt werden.

Aus den o. a. toxikologischen und dermatologischen Gründen werden die Monoalkanoletheraminverbindungen bevorzugt. Bei Anwendungen, bei denen ein Haut- oder sonstiger Kontakt ausgeschlossen werden kann oder bei Lagerung und Anwendung die Bildung von Nitrosaminen nicht eintritt, können auch die entsprechenden Dialkanoletheraminverbindungen eingesetzt werden, das heißt Verbindungen der allgemeinen Formel II

$$[H(OCHR-CH_2)_n-OR^1]_m NH_z \qquad (II)$$

worin R, $R^1$, n die o. a. Bedeutung haben, mit m = 2 und z = 1.
Die entsprechenden Trialkanolverbindungen mit m = 3 und z = o sind hier ebenfalls anwendbar.

Als der Einfachheit halber weiterhin so genannten Alkanoletheramine kommen ferner solche in Betracht, die am Stickstoffatom durch gegebenenfalls verzweigte Alkylgruppen, insbesondere $C_1$-$C_3$, substituiert sind.

Die Umsetzung zu den erfindungsgemäßen Reaktionsprodukten wird beispielsweise so durchgeführt, daß man das Alkanoletheramin und gegebenenfalls inerte Lösungsmittel vorlegt, auf 70 - 80 °C erhitzt und unter Rühren langsam die Orthoborsäure zugibt. Die Reaktion wird bei 70 - 160 °C, vorzugsweise 80 °C, durchgeführt und ist nach 2 - 3 Stunden beendet.

Die hierbei je nach Reaktionstemperatur und Reaktionszeit gegebenenfalls freiwerdenden Mengen an Wasser werden unter Normaldruck aus der Reaktionsmischung entfernt.

Die erfindungsgemäßen Reaktionsprodukte können in Konzentraten bis zu 50 Gew.-% enthalten sein und sind in den zur Anwendung kommenden wässrigen Lösungen oder Emulsionen mit etwa 0,1 - 6 Gew.-%, vorzugsweise 0,2 - 3 Gew.-%, enthalten.

Die Konzentrate und wässrigen Lösungen können zusätzlich noch weitere übliche Korrosionsschutzmittel enthalten, wie z. B. Aryl- oder Alkylsulfonamidocarbonsäuren der allgemeinen Formel III

$$R^1-SO_2-N(R^2)-R^3-COOH \qquad III$$

worin $R^1$ ein gegebenenfalls substituierter aliphatischer Kohlenwasserstoffrest mit 12 - 22 C-Atomen, ein gegebenenfalls substituierter aromatische Kohlenwasserstoffrest mit 6 - 10 C-Atomen, $R^2$ = Wasserstoff, Methyl, Ethyl, Hydroxymethyl, Cyanoethyl, Carboxymethyl, $R^3$ eine Alkylengruppe mit 1 -6 C-Atomen bedeutet.

Diese Verbindungen und ihre Herstellung werden in den DE-PSen 900 041, 12 98 672 und 11 43 953 beschrieben und können in Mengen von 2 - 50 Gew.-%, bezogen auf die Mischung aus Reaktionsprodukt und Sulfonamidocarbonsäure, mitverwendet werden. Bevorzugt werden erfindungsgemäß die Arylsulfonamidocarbonsäuren wie $\epsilon$-(Benzolsulfonyl-N-methylamino)-n-Capronsäure oder $\epsilon$-(Toluolsulfonyl-N-methylamino)-n-Capronsäure mitverwendet. Erforderlichenfalls können auch noch weitere, für den Einsatz auf diesem Gebiet bekannte und übliche Wirkstoffe zugegeben werden, wie Spindelöle, Emulgatoren, Fettsäuren, mehrwertige Alkohole, Komplexbildner.

Die wässrigen Korrosionsschutzmittel sind klare wässrige Lösungen bis transparente Emulsionen und praktisch schaumfrei und finden Verwendung als Kühl-, Schmier- und Reinigungsmittel für die metallverarbeitende Industrie sowie in technischen Druckübertragungs- und Kühlprozessen.

A) Herstellungsvorschriften

Herstellung der erfindungsgemäßen Umsetzungsprodukte

Beispiel 1

315 g Diglykolamin (3 Mol) werden vorgelegt und auf 70 °C erhitzt. 62 g Orthoborsäure (1 Mol) werden unter Rühren zugegeben und auf 80 °C erhitzt, bis eine klare Lösung entsteht.

Man erhält ca. 360 g einer klaren niederviskosen, in Wasser löslichen Flüssigkeit, die als Korrosionsinhibitor verwendet werden kann.

Beispiel 2

315 g Diglykolamin (3 Mol) werden vorgelegt und auf 70 °C erhitzt. 62 g Orthoborsäure (1 Mol) werden unter Rühren zugegeben und auf 150 - 160 °C erhitzt. Nach einer Reaktionszeit von 3 Stunden werden 9 ml Wasser (1/2 Mol) abdestilliert.

Man erhält ca. 350 g einer klaren, mittelviskosen Flüssigkeit.

Beispiel 3

210 g Diglykolamin (2 Mol) werden vorgelegt und auf 70 °C erhitzt. 62 g Orthoborsäure (1 Mol) werden langsam zugegeben und bei ca. 80 °C 1 - 2 Stunden reagiert.

Man erhält ca. 250 g einer klaren, mittelviskosen Flüssigkeit.

Beispiel 4

210 g Diglykolamin (2 Mol) werden vorgelegt und auf 70 °C erhitzt. 124 g Orthoborsäure (2 Mol) werden langsam eingerührt und bei 80 - 85 °C reagiert, bis eine klare Lösung entsteht.

Man erhält nach 2 - 3 Stunden eine klare, mittelviskose Flüssigkeit.

Beispiel 5

315 g Diglykolamin (3 Mol) werden vorgelegt und auf ca. 70 °C erhitzt. 186 g Orthoborsäure (3 Mol) werden langsam zugegeben und die Temperatur langsam auf 150 °C erhöht. Nach einer Reaktionszeit von ca. 3 Stunden destillieren 46 g (= 2,5 Mol Reaktionswasser).

Man erhält eine klare, hochviskose Flüssigkeit.

Beispiel 6

90 Gew.-% aus Beispiel 4 werden bei 40 - 50 °C mit 10 Gew.-% einer Arylsulfonamidocarbonsäure (HOSTACOR® H der Fa. Hoechst) gemischt.

Man erhält eine klare, niederviskose Flüssigkeit, die als Korrosionsschutzmittel eingesetzt werden kann.

Beispiel 7

450 g Triglykolamin (3 Mol) werden vorgelegt und auf 80 °C erhitzt. 62 g Orthoborsäure (1 Mol) werden unter Rühren langsam eingetragen und ca. 1,5 bis 2,5 Stunden reagiert, bis eine klare Lösung mit der gewünschten Viskosität erreicht ist.

Beispiel 8

360 g Aminopropylglykolether (3 Mol) werden vorgelegt und auf 80 °C erhitzt. 62 g Orthoborsäure (1 Mol) werden unter Rühren langsam eingetragen und ca. 1,5 bis 2,5 Stunden reagiert, bis eine klare Lösung mit der gewünschten Viskosität erreicht ist.

Vergleichsprodukt A

62 g Orthoborsäure (1 Mol) werden mit 315 g (3 Mol) Diethanolamin auf 90 °C erhitzt, bis eine klare Lösung entsteht.

Vergleichsprodukt B

62 g Orthoborsäure (1 Mol) werden mit 62 g (1 Mol) Monoethanolamin auf 90 °C erhitzt.
Man erhält eine klare, hochviskose Flüssigkeit.

B) Anwendungstechnische Prüfung

Geprüft werden wässrige Verdünnungen der erfindungsgemäßen Reaktionsprodukte A) 1 - 6 in der wie folgt angegebenen Weise:
Rostschutztest nach DIN 51360, Teil 2 (Späne-Filter-Test)

Tabelle 1

| Produkt | Testergebnis nach DIN 51 360, Tl.2 | | |
|---|---|---|---|
| | 1,5 % | 2 % | 2,5 % |
| Vergleichsprodukt A | 4 | 4 | 3 |
| Vergleichsprodukt B | 4 | 2 | 0 |
| Beispiel 1 | 3 | 1 | 0 |
| Beispiel 2 | 3 | 1 | 0 |
| Beispiel 3 | 4 | 2 | 0 |
| Beispiel 4 | 4 | 3 | 0 |
| Beispiel 5 | 4 | 3 | 0 |
| Beispiel 6 | 1 | 0 | 0 |
| Beispiel 7 | 3 | 1 | 0 |
| Beispiel 8 | 3 | 1 | 0 |
| Bewertung:<br>0 = keine Korrosion<br>1 = Spuren Korrosion<br>2 = leichte Korrosion<br>3 = mäßige Korrosion<br>4 = starke Korrosion | | | |

C. Herstellung von Konzentraten für die spanende Metallbearbeitung

Mit den oben angeführten Beispiel-Substanzen A) 1 - 6 lassen sich auf einfache Weise moderne wassermischbare, biostabile Kühlschmierstoffe formulieren:

Vorschrift I:

35 g Spindelöl[1]
12 g Fettsäurediethanolamid[2]
9 g nichtionogener Emulgator[3]
23 g erfindungsgemäßes Reaktionsprodukt aus Beispiel A) 1
14 g Wasser
3 g Hilfsstoffe [4/1]
4 g Hilfsstoffe [4/2]

Vorschrift II:

32 g Spindelöl [1]
14 g Fettsäurediethanolamid[2]
9,5 g nichtionogener Emulgator[3]
22 g erfindungsgemäßes Reaktionsprodukt aus Beispiel A) 4
14 g Wasser
5,5 g Ölsäure
3 g Hilfsstoffe [4/2]

Vorschrift III:

40 g Spindelöl
15 g Fettsäurediethanolamid [2]
8 g nichtionogener Emulgator [3]
22 g erfindungsgemäßes Reaktionsprodukt aus Beispiel A) 3
9 g Wasser
3 g Hilfsstoffe [4/1]
3 g Hilfsstoffe [4/2]

Vorschrift IV:

35 g Spindelöl[1]
12 g Fettsäurediethanolamid[2]
9 g nichtionogener Emulgator[3]
23 g erfindungsgemäßes Reaktionsprodukt aus Beispiel A) 6
14 g Wasser
3 g Hilfsstoffe [4/1]
4 g Hilfsstoffe [4/2]

Vorschrift V:

32 g Spindelöl[1]
14 g Fettsäurediethanolamid[2]
9,5 g nichtionogener Emulgator[3]
22 g erfindungsgemäßes Reaktionsprodukt aus Beispiel A) 1
14 g Wasser
5,5 g Ölsäure
3 g Hilfsstoffe [4/2]

Vorschrift VI:

35 g Spindelöl[1]
12 g Fettsäurediethanolamid[2]
9 g nichtionogener Emulgator[3]
23 g erfindungsgemäßes Reaktionsprodukt aus Beispiel A) 7
14 g Wasser
3 g Hilfsstoffe[4/1]
4 g Hilfsstoffe[4/2]

Vorschrift VII:

35 g Spindelöl[1]
12 g Fettsäurediethanolamid[2]
9 g nichtionogener Emulgator[3]
23 g erfindungsgemäßes Reaktionsprodukt aus Beispiel A) 8
14 g Wasser
3 g Hilfsstoffe[4/1]

4 g Hilfsstoffe[4/2]

Vergleichsbeispiel 1

35 g Spindelöl[1]
12 g Fettsäurediethanolamid[2]
5 g nichtionogener Emulgator[3]
29 g Vergleichsprodukt A
14 g Wasser
3 g Hilfsstoffe[4/2]
2 g Hilfsstoffe[4/1]

Vergleichsbeispiel 2

30 g Spindelöl[1]
12 g Fettsäurediethanolamid[2]
7 g nichtionogener Emulgator[3]
20 g Vergleichsprodukt B
8 g Diethanolamin
14 g Wasser
6 g Ölsäure
3 g Hilfsstoffe[4/2]

Erläuterungen:

| | |
|---|---|
| 1 | Spindelöl auf Basis eines Mineralölraffinats mit einer Viskosität von 10 cSt bei 20 °C |
| 2 | Fettsäurediethanolamid auf Basis monomerer Fettsäure mit 8 - 22 C-Atomen |
| 3 | Fettalkohole mit einer Kettenlänge von 12 - 18 C-Atomen und 4 - 6 Molen Ethylenoxid |
| 4/1 | Fettsäuren mit einer Kettenlänge von 12 - 18 C-Atomen |
| 4/2 | Glykole (vorzugsweise Diethylenglykolmonobutylether) |
| 4/3 | Komplexbildner (Ethylendiamintetraessigsäure-tetra-Na-Salz) |

Obige Konzentrate werden vorzugsweise 2 - 5 %ig bei der spangebenden Metallbearbeitung in wässriger Emulsion eingesetzt (Tabelle 2).

Tabelle 2

Anwendungstechnische Prüfung

| Beispiel | Herstellung der Konzentrate nach Vorschrift | Erf. gem. Reaktionsprodukt Beispiel | Konzentration in wässriger Emulsion Test nach DIN 51360, Tl. 2: 1,5 % | 2 % | 2,5 % |
|---|---|---|---|---|---|
| 1 | I | 1 | 3 | 1 | 0 |
| 2 | II | 4 | 3 | 0 | 0 |
| 3 | III | 3 | 3 | 1 | 0 |
| 4 | V | 1 | 2 | 0 | 0 |
| 5 | IV | 6 | 2 | 0 | 0 |
| 6 | VI | 7 | 3 | 1 | 0 |
| 7 | VII | 8 | 3 | 1 | 0 |
| Vergl.-beispiele | Vergleichsprodukt | | | | |
| 1 | A | - | 4 | 1 | 0 |
| 2 | B | - | 2 | 1 | 0 |

**Patentansprüche**

**Patentansprüche für folgende Vertragsstaaten : DE, GB, FR, IT, NL, SE, CH, LI, BE**

**1.** Reaktionsprodukte aus Borsäure und mindestens einem Alkanoletheramin der allgemeinen Formel

$H(OCHR\text{-}CH_2)_n\text{-}O\text{-}R^1\text{-}NH_2$ (I)

worin R = H oder $CH_3$; $R^1$ = $-(CH_2)_2-$, $-(CH_2)_3-$,

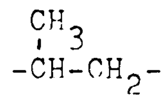

bedeutet und n eine Zahl von 1 - 5 sein kann.

2. Reaktionsprodukte gemäß Anspruch 1, dadurch gekennzeichnet, daß R = H und $R^1$ = $-(CH_2)_2-$ mit n = 1 oder 2 bedeutet.

3. Reaktionsprodukte gemäß den Ansprüchen 1 + 2, dadurch gekennzeichnet, daß die Umsetzung von Borsäure mit Alkanoletheramin im Molverhältnis von 1 : 1 bis 1 : 6 erfolgt.

4. Reaktionsprodukte gemäß den Ansprüchen 1 + 2, dadurch gekennzeichnet, daß die Umsetzung von Borsäure mit Alkanoletheramin im Molverhältnis von 1 : 3 erfolgt.

5. Korrosionsschutzmittel in Form einer wässrigen Lösung, enthaltend mindestens ein Reaktionsprodukt nach den Ansprüchen 1 - 4.

6. Korrosionsschutzmittel in Form einer wässrigen Lösung gemäß Anspruch 5, dadurch gekennzeichnet, daß das Reaktionsprodukt gemäß den Ansprüchen 1 - 4 in Mengen von 0,5 - 50 Gew.-%, bezogen auf Gesamtmischung, gegebenenfalls unter Mitverwendung üblicher Korrosionsschutzmittel und weiterer bekannter Wirkstoffe eingesetzt wird.

7. Korrosionsschutzmittel in Form einer wässrigen Lösung gemäß Anspruch 5, dadurch gekennzeichnet, daß mindestens ein Reaktionsprodukte gemäß den Ansprüchen 2 - 4 in Mengen von 0,1 - 6 Gew-% eingesetzt wird.

8. Korrosionsschutzmittel in Form einer wässrigen Lösung gemäß Anspruch 5, dadurch gekennzeichnet, daß Sulfonamidocarbonsäuren der allgemeinen Formel

$R^1-SO_2-NR^2-R^3-COOH$

worin $R^1$ ein gegebenenfalls substituierter aliphatischer Kohlenwasserstoffrest mit 12 - 22 C-Atomen, ein gegebenenfalls substituierter aromatischer Kohlenwasserstoffrest mit 6 - 10 C-Atomen, $R^2$ = Wasserstoff, ein Methyl-, Ethyl-, Hydroxymethyl-, Cyanoethyl-, Carboxymethylrest und $R^3$ eine Alkylengruppe mit 1 - 6 C-Atomen bedeutet, mitverwendet werden.

**Patentansprüche für folgenden Vertragsstaat : ES**

1. Verfahren zur Herstellung von Borsäureestern durch Umsetzung von Borsäure mit mindestens einem Alkanoletheramin der allgemeinen Formel

$H(OCHR-CH_2)_n-O-R^1-NH_2$ (I)

worin R = H oder $CH_3$; $R^1$ = $-(CH_2)_2-$, $-(CH_2)_3-$,

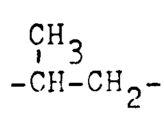

bedeutet und n eine Zahl von 1 - 5 sein kann.

2. Verfahren gemäß Anspruch 1, dadurch gekennzeichnet, daß R = H und $R^1$ = $-(CH_2)_2$ mit n = 1 oder 2 bedeutet.

**3.** Verfahren gemäß den Ansprüchen 1 + 2, dadurch gekennzeichnet, daß die Umsetzung von Borsäure mit Alkanoletheramin im Molverhältnis von 1 : 1 bis 1 : 6 erfolgt.

**4.** Verfahren gemäß den Ansprüchen 1 + 2, dadurch gekennzeichnet, daß die Umsetzung von Borsäure mit Alkanoletheramin im Molverhältnis von 1 : 3 erfolgt.

**5.** Korrosionsschutzmittel in Form einer wässrigen Lösung, enthaltend mindestens ein Reaktionsprodukt nach den Ansprüchen 1 - 4.

**6.** Korrosionsschutzmittel in Form einer wässrigen Lösung gemäß Anspruch 5, dadurch gekennzeichnet, daß das Reaktionsprodukt gemäß den Ansprüchen 1 - 4 in Mengen von 0,5 - 50 Gew.-%, bezogen auf Gesamtmischung, gegebenenfalls unter Mitverwendung üblicher Korrosionsschutzmittel und weiterer bekannter Wirkstoffe eingesetzt wird.

**7.** Korrosionsschutzmittel in Form einer wässrigen Lösung gemäß Anspruch 5, dadurch gekennzeichnet, daß mindestens ein Reaktionsprodukte gemäß den Ansprüchen 2 - 4 in Mengen von 0,1 - 6 Gew-% eingesetzt wird.

**8.** Korrosionsschutzmittel in Form einer wässrigen Lösung gemäß Anspruch 5, dadurch gekennzeichnet, daß Sulfonamidocarbonsäuren der allgemeinen Formel

$R^1$-$SO_2$-$NR^2$-$R^3$-COOH

worin $R^1$ ein gegebenenfalls substituierter aliphatischer Kohlenwasserstoffrest mit 12 - 22 C-Atomen, ein gegebenenfalls substituierter aromatischer Kohlenwasserstoffrest mit 6 - 10 C-Atomen, $R^2$ = Wasserstoff, ein Methyl-, Ethyl-, Hydroxymethyl-, Cyanoethyl-, Carboxymethylrest und $R^3$ eine Alkylengruppe mit 1 - 6 C-Atomen bedeutet, mitverwendet werden.

## Claims

### Claims for the following Contracting States : DE, GB, FR, IT, NL, SE, CH, LI, BE

**1.** Reaction products of boric acid and at least one alkanol ether amine of the general formula

H(OCHR-$CH_2$)n-O-$R^1$$NH_2$ (I)

wherein R = H or $CH_3$; $R^1$ = -$(CH_2)_2$-, -$(CH_2)_3$-,

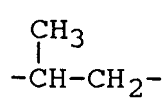

and n may be a number from 1 to 5.

**2.** Reaction products according to claim 1, characterised in that R = H and $R^1$ = -$(CH_2)_2$- with n = 1 or 2.

**3.** Reaction products according to claims 1 and 2, characterised in that the reaction of boric acid with alkanol ether amine is effected in a molar ratio of from 1:1 to 1:6.

**4.** Reaction products according to claims 1 and 2, characterised in that the reaction of boric acid with alkanol ether amine is effected in a molar ratio of 1:3.

**5.** Corrosion inhibitors in the form of an aqueous solution comprising at least one reaction product according to any one of claims 1 to 4.

**6.** Corrosion inhibitors in the form of an aqueous solution according to claim 5, characterised in that the reaction product according to any one of claims 1 to 4 is used in amounts of from 0.5 to 50 % by

weight, based on the total mixture, optionally with the concomitant use of conventional corrosion inhibitors and other known active substances.

**7.** Corrosion inhibitors in the form of an aqueous solution according to claim 5, characterised in that at least one reaction product according to any one of claims 2 to 4 is used in amounts of from 0.1 to 6 % by weight.

**8.** Corrosion inhibitors in the form of an aqueous solution according to claim 5, characterised in that sulphonamidocarboxylic acids of the general formula

$R^1-SO_2-NR^2-R^3-COOH$,

wherein $R^1$ is an optionally substituted aliphatic hydrocarbon radical having from 12 to 22 carbon atoms, an optionally substituted aromatic hydrocarbon radical having from 6 to 10 carbon atoms, $R^2$ = hydrogen or a methyl, ethyl, hydroxymethyl, cyanoethyl or carboxymethyl radical, and $R^3$ is an alkylene group having from 1 to 6 carbon atoms, are used concomitantly.

**Claims for the following Contracting State : ES**

**1.** A process for the manufacture of boric acid esters by reaction of boric acid with at least one alkanol ether amine of the general formula

$H(OCHR-CH_2)n-O-R^1-NH_2$ (I)

wherein R = H or $CH_3$; $R^1$ = $-(CH_2)_2-$, $-(CH_2)_3-$,

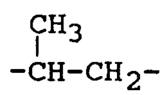

and n may be a number from 1 to 5.

**2.** A process according to claim 1, characterised in that R = H and $R^1$ = $-(CH_2)_2-$ with n = 1 or 2.

**3.** A process according to claims 1 and 2, characterised in that the reaction of boric acid with alkanol ether amine is effected in a molar ratio of from 1:1 to 1:6.

**4.** A process according to claims 1 and 2, characterised in that the reaction of boric acid with alkanol ether amine is effected in a molar ratio of 1:3.

**5.** Corrosion inhibitors in the form of an aqueous solution comprising at least one reaction product according to any one of claims 1 to 4.

**6.** Corrosion inhibitors in the form of an aqueous solution according to claim 5, characterised in that the reaction product according to any one of claims 1 to 4 is used in amounts of from 0.5 to 50 % by weight, based on the total mixture, optionally with the concomitant use of conventional corrosion inhibitors and other known active substances.

**7.** Corrosion inhibitors in the form of an aqueous solution according to claim 5, characterised in that at least one reaction product according to any one of claims 2 to 4 is used in amounts of from 0.1 to 6 % by weight.

**8.** Corrosion inhibitors in the form of an aqueous solution according to claim 5, characterised in that sulphonamidocarboxylic acids of the general formula

$R^1-SO_2-NR^2-R^3-COOH$,

wherein $R^1$ is an optionally substituted aliphatic hydrocarbon radical having from 12 to 22 carbon atoms, an optionally substituted aromatic hydrocarbon radical having from 6 to 10 carbon atoms, $R^2$ = hydrogen or a methyl, ethyl, hydroxymethyl, cyanoethyl or carboxymethyl radical, and $R^3$ is an alkylene group having from 1 to 6 carbon atoms, are used concomitantly.

**Revendications**

**Revendications pour les Etats contractants suivants : DE, GB, FR, IT, NL, SE, CH, LI, BE**

1. Produits de réaction obtenu à partir de l'acide orthoborique et d'au moins une alcanolétheramine de formule générale I :

   $H(OCHR-CH_2)_n-O-R^1-NH_2$ (I)

   dans laquelle R = H ou $CH_3$ ; $R^1$ signifie $-(CH_2)_2-$,$-(CH_2)_3-$,

   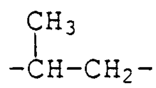

   et n peut être un nombre de 1 à 5, de préférence 1 ou 2.

2. Produits de réaction selon la revendication 1, caractérisés en ce que R = H et $R^1$ = $-(CH_2)_2-$ avec n = 1 ou 2.

3. Produits de réaction selon les revendications 1 + 2, caractérisés en ce qu'on effectue la réaction de l'acide borique avec l'alcanolétheramine dans un rapport molaire de 1:1 à 1:6.

4. Produits de réaction selon les revendications 1 + 2, caractérisés en ce qu'on effectue la réaction de l'acide borique avec l'alcanolétheramine dans un rapport molaire de 1:3.

5. Agent de protection contre la corrosion sous forme d'une solution aqueuse, contenant au moins un produit de réaction selon les revendications 1 à 4.

6. Agent de protection contre la corrosion sous forme d'une solution aqueuse selon la revendication 5, caractérisé en ce qu'on utilise le produit de réaction selon les revendications 1 à 4, en quantités de 0,5 à 50 % en poids par rapport à la totalité du mélange, éventuellement en utilisant conjointement des agents de protection contre la corrosion usuels et d'autres matières actives connues.

7. Agent de protection contre la corrosion sous forme d'une solution aqueuse selon la revendication 5, caractérisé en ce qu'on utilise au moins un produit de réaction selon les revendications 2 à 4, en quantités de 0,1 à 6 % en poids.

8. Agent de protection contre la corrosion sous forme d'une solution aqueuse selon la revendication 5, caractérisé en ce qu'on utilise des acides sulfonamidocarboxyliques de formule générale :

   $R^1-SO_2-NR^2-R^3-COOH$

   dans laquelle $R^1$ représente un radical hydrocarboné aliphatique éventuellement substitué comportant de 12 à 22 atomes de carbone, un radical hydrocarboné aromatique éventuellement substitué comportant de 6 à 10 atomes de carbone, $R^2$ représente l'hydrogène, les radicaux méthyle, éthyle, hydroxyméthyle, cyanoéthyle, carboxyméthyle, et $R^3$ représente un groupe alkylène comportant de 1 à 6 atomes de carbone.

**Revendications pour l'Etat contractant suivant : ES**

1. Procédé pour la préparation d'esters de l'acide borique par réaction de l'acide borique et d'au moins une alcanolétheramine de formule générale I :

$H(OCHR-CH_2)n-O-R^1-NH_2$ (I)

dans laquelle R = H ou $CH_3$ ; $R^1$ signifie $-(CH_2)_2-$,$-(CH_2)_3-$,

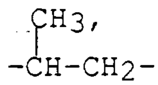

et n peut être un nombre de 1 à 5.

**2.** Procédé selon la revendication 1, caractérisé en ce que R = H et $R^1 = -(CH_2)_2-$ avec n = 1 ou 2.

**3.** Procédé selon les revendications 1 + 2, caractérisé en ce qu'on effectue la réaction de l'acide borique avec l'alcanolétheramine dans un rapport molaire de 1:1 à 1:6.

**4.** Procédé selon les revendications 1 + 2, caractérisé en ce qu'on effectue la réaction de l'acide borique avec l'alcanolétheramine dans un rapport molaire de 1:3.

**5.** Agent de protection contre la corrosion sous forme d'une solution aqueuse, contenant au moins un produit de réaction selon les revendications 1 à 4.

**6.** Agent de protection contre la corrosion sous forme d'une solution aqueuse selon la revendication 5, caractérisé en ce qu'on utilise le produit de réaction selon les revendications 1 à 4, en quantités de 0,5 à 50 % en poids par rapport à la totalité du mélange, éventuellement en utilisant conjointement des agents de protection contre la corrosion usuels et d'autres matières actives connues.

**7.** Agent de protection contre la corrosion sous forme d'une solution aqueuse selon la revendication 5; caractérisé en ce qu'on utilise au moins un produit de réaction selon les revendications 2 à 4, en quantités de 0,1 à 6 % en poids.

**8.** Agent de protection contre la corrosion sous forme d'une solution aqueuse selon la revendication 5, caractérisé en ce qu' on utilise les acides sulfonamidocarboxyliques de formule générale :

$R^1-SO_2-NR^2-R^3-COOH$

dans laquelle $R^1$ représente un radical hydrocarboné aliphatique, éventuellement substitué, comportant de 12 à 22 atomes de carbone, un radical hydrocarboné aromatique, éventuellement substitué, comportant de 6 à 10 atomes de carbone, $R^2$ représente l'hydrogène, les radicaux méthyle, éthyle, hydroxyméthyle, cyanoéthyle, carboxyméthyle, et $R^3$ représente un groupe alkylène comportant de 1 à 6 atomes de carbone.